# EUROPÄISCHE PATENTSCHRIFT

(11) **EP 1 689 798 B1**
(45) Veröffentlichungstag und Bekanntmachung des Hinweises auf die Patenterteilung: **26.06.2013**
(21) Anmeldenummer: 04803154.6
(22) Anmeldetag: 17.11.2004
(51) Int. Cl.: C08G 18/76, C08G 18/38, C08G 18/12, C08G 18/66

(54) **MONOMERARME PREPOLYMERZUSAMMENSETZUNG AUS UNSYMMETRISCHEN POLYISOCYANATEN UND STERISCH GEHINDERTEN POLYOLEN**
PREPOLYMER COMPOSITION LOW IN MONOMERS, MADE OF UNSYMMETRICAL POLYISOCYANATES AND STERICALLY HINDERED POLYOLS
COMPOSITION DE PREPOLYMERES PAUVRE EN MONOMERES OBTENUE A PARTIR DE POLYISOCYANATES ASYMETRIQUES ET DE POLYOLS A ENCOMBREMENT STERIQUE

(30) Priorität: 06.12.2003 DE 10357093
(43) Veröffentlichungstag der Anmeldung: 16.08.2006
(73) Patentinhaber: RATHOR AG, 9050 Appenzell (CH)
(72) Erfinder: SOMMER, Heinrich, CH-9050 Appenzell (CH)
(74) Vertreter: Thiel, Christian
(86) Internationale Anmeldenummer: PCT/EP2004/013010
(87) Internationale Veröffentlichungsnummer: WO 2005/054324

(56) Entgegenhaltungen:
- WO-A-93/09158
- WO-A-03/051950
- WO-A-03/051951
- DE-A1- 4 038 401

## Beschreibung

Die Erfindung betrifft eine Prepolymerzusammensetzung, insbesondere zur Erzeugung von Polyurethanschäumen auf Basis von Polyisocyanaten und Polyolen, wobei die Prepolymerzusammensetzung wenigstens einen Katalysator enthält, der die Prepolymerbildung aus den Ausgangsstoffen und die Aushärtung des Prepolymers bei seiner Anwendung zu katalysieren vermag.

Die erfindungsgemäße Prepolymerzusammensetzung dient zur Erzeugung von Polyurethandämmschäumen, deren hauptsächliches Anwendungsgebiet das Bauwesen ist. Sie wird zur Montage von Fenster- und Türzargen und zum Ausschäumen von Hohlräumen, auch in technischen Produkten, bei denen die Hohlräume zur Vermeidung von Schwitzwassernestem verfüllt werden müssen, eingesetzt.

Soweit 1K-Polyurethanschäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 50 g/l ausgebracht und verarbeitet. 1K-Schäume härten allein mit Hilfe der in der Luft enthaltenen Feuchtigkeit aus, das heißt sie sind feuchtigkeitshärtend.

Die Prepolymerzusammensetzung für 2K-Polyurethanschäume benötigen zum Aushärten eine zweite, meist hydroxygruppenhaltige Komponente. In der Regel wird hier ein Polyol unmittelbar vor der Schaumbildung zugesetzt. Die Aushärtung des Polyurethanschaums kann durch Katalysatoren beschleunigt werden. Die typischen Raumgewichte bei 2K-Schäumen liegen bei 10 bis 100 g/l. Die zweite hydroxygruppenhaltige Komponente kann Wasser als Vernetzer enthalten. Das aus der Reaktion mit Wasser entstehende CO₂ unterstützt die Schaumbildung.

Üblich sind aber auch die sogenannten 1,5K-Polyurethanschäume, die Übergangsformen zwischen 1K- und 2K-Schäumen darstellen. Bei den sogenannten 1,5K-Polyurethanschäumen wird dem Prepolymer vor dem Ausbringen eine zur Umsetzung der darin noch enthaltenen freien Isocyanatgruppen nicht ausreichende Menge einer Hydroxykomponente zugesetzt. Unter den 1,5K-Schäumen werden auch Schaumbildner mit mehr als einer separaten reaktiven Komponente erfaßt.

Herkömmliche Prepolymerzusammensetzungen für Polyurethanschäume enthalten eine Prepolymerkomponente, die einen Mindestgehalt an reaktiven NCO-Gruppen aufweisen. Das Prepolymer selbst ist ein Polymer geeigneter Viskosität mit endständigen NCO-Gruppen. Um PU-Prepolymere mit endständigen NCO-Gruppen zu erhalten, ist es üblich, polyfunktionelle Alkohole mit einem Überschuß an monomeren Polyisocyanaten, in der Regel überwiegend Diisocyanat, zur Reaktion zu bringen.

Geeignete herrkömmliche Polyisocyanate sind beispielsweise Isophorondiisocyanat, auch als IPDI bezeichnet, Toluylendiisocyanat, auch als TDI bezeichnet, 1,5-Diisocyanatonaphthalin, auch als NDI bezeichnet, Triisocyanatotrimethylmethan, 1,6-Diisocyanatohexan, auch als HDI bezeichnet, und 4,4'-Diisocyanatodiphenylmethan, üblicherweise als MDI bezeichnet. Alle diese Ausgangsmaterialien können in roher Form, d.h. als Gemisch, wie auch in Form der reinen Isomeren oder Abmischungen der Isomeren eingesetzt werden oder auch in Form ihrer reaktiven Derivate verwandt werden. Als reaktive Derivate kommen vor allem dimere und trimere Formen der Isocyanate wie auch deren Biurete und Allophanate in Frage. Wichtig ist eine Funktionalität von ≥ 2.

Zur Herstellung der PU-Prepolymere werden die genannten Polyisocyanate mit hydroxygruppenhaltigen Polyethern, Polyestern oder Polyolen umgesetzt, zu achten ist hierbei auf eine für den Zweck geeignete Viskosität des dabei entstehenden Prepolymers. Zur Beschleunigung bzw. Herbeiführung der Umsetzung findet diese in Gegenwart eines Katalysators statt. In der Regel handelt es sich hierbei um Katalysatoren auf Aminbasis, als auch auf Basis von Carboxylaten.

Die zur Herstellung von Polyurethanschäumen aus Druckbehältern geeigneten PU-Prepolymere enthalten ein Restgehalt an nicht umgesetzten monomeren Isocyanaten, der bis zu 40 Gew.-% betragen kann. Dieser Restgehalt ist zumeist herstellungsbedingt, aber auch erwünscht, da sich dieser Restgehalt positiv auf die Gebrauchsfähigkeit, insbesondere die Form- und Dimensionsstabilität der damit erzeugten Schäume auswirkt. Auch beeinflussen die Monomeren die Viskosität der Prepolymerabmischung positiv.

Trotz ihrer in der Regel recht niedrigen Flüchtigkeit gelten heutzutage monomere Isocyanate wegen ihrer Toxizität als kennzeichnungspflichtige Verfahrensstoffe. Allerdings weisen die flüchtigen Diisocyanate, wie beispielsweise IPDI oder TDI, schon bei Raumtemperatur einen nicht zu vernachlässigenden Dampfdruck auf. Für MDI, das bevorzugte Ausgangsisocyanat für 1K-Schäume, gilt ein MAK-Wert von 0,01 ppm ebenso für HDI. Wegen der Toxizität der Inhaltsstoffe unterliegen nicht vollständig restentleerte Emballagen die Prepolymere enthalten, kostenträchtigen Beschränkungen bei der Entsorgung.

Die Herstellung von PU-Prepolymeren mit niedrigen Restmonomergehalten an Isocyanaten ist möglich, jedoch hat die eingeschränkte Gebrauchsfähigkeit der daraus hergestellten Schäume den Einsatz solcher Prepolymerzusammensetzungen bislang eingeschränkt. Ein allgemeines Problem stellt die Applikationsfähigkeit von monomerarmen Prepolymerzusammensetzungen aus Druckdosen dar. Die genannten monomerarmen Prepolymere können beispielsweise durch Entzug des Monomers über Destillation und gegebenenfalls weiterer Umsetzung mit einem reaktiven hydroxygruppenhaltigen Polyether und/oder Polyester und/oder Pflanzenöl, modifiziert wie unmodifiziert, hergestellt werden.

Angesichts der Nachteile bislang bekannter, monomeres Isocyanat enthaltener PU-Prepolymere ist es ein zentrales Ziel der Forschung, ein PU-Prepolymer bereitzustellen, das wenig oder im wesentlichen kein monomeres Isocyanat mehr enthält und gleiche oder bessere Materialeigenschaften aufweist, insbesondre die Materialeigenschaften, die von der Bauindustrie verlangt werden, wie etwa die Dimensionsstabilität des Schaums.

Aus der WO 93/09158 A1 sind lösungsmittelfreie Beschichtungssysteme aus asymmetrischen Polyisocyanaten und Polypropylenetherclycol bekannt. WO 03/051950 A1 beschreibt monomerarme Beschichtungs-, Klebstoff-, Dicht - und Vergussmassen auf Basis von IPDI und Polypropylenoxidetherglykol. WO 03/051951 beschreibt in einem mehrstufigen Verfahren erhältliche monomerarme Polyurethanprepolymere auf Basis von IPDI und Polypropylenoxidetherglykol. Aus DE-A-10 38 401 werden verschäumungsfähige Gemische auf Basis von Polyisocyanaten und Polyoxypropylenglykolen beschrieben. Dabei können unsymmetrische Diisocyanate zum Einsatz kommen. Die Herstellung monomerarmer Prepolymere ist dort nicht beabsichtigt.

Es ist ein Ziel der Erfindung, ein maßgeschneidertes PU-Prepolymer zur Verfügung zu stellen, das insbesondere dimensionsstabile 1K-, 1,5K-und 2K-Polyurethanschäume bildet und toxische und/oder reizende Monomere in so geringer Menge enthält- daß sie für den Anwender toxikologisch unbedenklich sind.

Eine weiteres Ziel der Erfindung ist es, Vernetzer, die den PU-Prepolymeren eine verbesserte Dimensionsstabilität verleihen, zur Verfügung zu stellen.

Erfindungsgemäß wird eine Prepolymerzusammensetzung der eingangs bezeichneten Art bereltgestellt, die auf der Verwendung von asymmetrisohen Polyisocyanaten mit sterisch gehinderten Polyolen beruht, wobei die sterisch gehinderten Polyole monomere Diole mit sekundären und/oder tertiären Hydroxygruppen sind. bevorzugt die reaktivere Isocyanatgruppe abreagiert und damit die Tendenz zur statistischen Produktverteilung, bei der immer ein mehr oder weniger großer Anteil an monomerem Polyisocyanate zuruckbleibt, unterlaufen wird. Erst nach weitgehender Reaktion der reaktiveren Isocyanatgruppen kommen die weniger reaktiven zur Reaktion

Für die Herstellung der erfindungsgemäßen Prepolymerzusammensetzung werden asymmetrische Polyisocanate verwendet. Insbesondere werden dazu Polyisocyanate, die uber zwei Isocyanatgruppen verfügen, eingesetzt. Die Prepolymerzusammensetzungen sind selbst Reaktionsprodukte aus, isocyanatgruppenhaltigen Monomeren und damit reaktiven hydroxygruppenhaltigen Verbindungen.

Asymmetrische Polyisocyanate im Sinne der Erfindung sind solche, bei denen aus elektronischen und/oder sterischen Gründen eine der Isocyanatgruppen schneller, leichter und bevorzugt mit der Polyolkomponente abreagiert.

Die erfindungsgemäß verwendeten Polyisocyanate sind Diphenylmethan-2,4'-Diisocyanat (2,4'-MDI) und Toluylendiisocyanat (2,4-TDI).

Als sterisch gehinderte monomeren Diole kommen bevorzugt Propylenglykol, 2,3-Butandiol, 2,3-Dimethyl-2,3-butandiol, 2-Ethyl-1,3-hexandiol, 2-Methyl-1,3-butandiol, 1-Phenyl-1,4-butandiol, 2-Methyl-1,3-propandiol, 1,2-Diphenyl-1,2-ethandiol und 1,2-Dicyclohexyl-1,2-ethandiol in Frage, sowie weitere hier nicht aufgeführte sekundäre und tertiäre Diole, die einzeln aber auch als Mischungen davon eingesetzt werden können.

Die erfindungsgemäße Prepolymerzusammensetzung enthält in der Regel wenigstens einen Katalysator, der die Prepolymerbildung aus den Ausgangsstoffen und die Aushartung des Prepolymers bei seiner Anwendung zu katalysieren vermag. Besonders bevorzugte Katalysatoren sind tertiäre Amine. Die im folgenden genannten Katalysatoren haben sich als besonders geeignet erwiesen. Dies sind Derivate des Morpholins wie z. B. Dimorpholinodimethylether, Dimorpholinodiethylether, Di-(2,6-dimethylmorpholinoethyl)-ether und/oder N-Methylmorpholin sind bevorzugt zu nennen. Weitere bevorzugte tertiäre Amine sind N,N,N',N'-Tetramethylhexan-1,6-diamin, N,N,N',N'-Tetramethylmethylendiphenyl-4,4'-diamin, N,N,N',N'-Tetramethylmethylen-dihexyl-4,4'-diamin, N,N-Dimethylcyclohexylamin, N,N-Dipropylcyclohexylamin, N,N-Dicylohexyl-methylamin. Die vorstehend genannten Katalysatoren können sowohl einzeln als auch in Mischung zur Herstellung der Prepolymerzusammensetzung, einer Polymerzusammensetzung zur Abmischung mit anderen Polyisocyanaten als auch zur Aushärtung des Prepolymers verwendet werden.

Sterisch anspruchsvolle Aminkatalysatoren sind dabei aus zwei Gründen bevorzugt. Zum einen fördern sie die Selektivität für sterisch wenig anspruchsvolle Isocyanatgruppen im Sinne der Erfindung. Zum anderen sind sie geeignet, die Lagerstabilitätdes Systems zu erhöhen.

Die PU-Prepolymere aus der Reaktion von asymmetrischen Polyisocyanaten mit sterisch gehinderten Polyolen sind sowohl zur Herstellung von Prepolymerzusammensetzungen als auch zum Abmischen mit anderen monomerarmen eingestellten Polyisocyanaten besonders bevorzugt.

Als weiterer Vorteil ergibt sich, daß die erfindungsgemäß hergestellten Schäume ein sehr gutes Schrumpfverhalten durch die sehr starke Vernetzung zeigen.

Schließlich sind diese Schäume gegenüber herkömmlichen in ihrer Kälteelastizität verbessert, was eine gute Verarbeitbarkeit auch im kritischen Bereich von 0°C bis 5°C ermöglicht.

Die erfindungsgemäße Prepolymerzusammensetzung enthält insbesondere Propan, Butan und/oder Dimethylether als Treibgaskomponente. Als weitere Treibgase kommen Fluorkohlenwasserstoffe in Frage, die unter den in einem Druckbehälter herrschenden Druckbedingung verflüssigbar sind, beispielsweise R 125, R 134a, R 143 und R 152a. Um den Anteil an brennbaren und halogenhaltigen Treibgasen niedrig zu halten, können weitere Gase zugesetzt werden, die unter den in der Druckdose herrschenden Druckbedingungen nicht kondensierbar sind, beispielsweise CO₂, N₂O oder N₂. Von den genannten Gasen ist insbesondere CO₂ bevorzugt, da es sich zum Teil in der Prepolymerkomponente lösen und dadurch zur Schaumbildung beitragen kann, daneben aber auch als gutes Treibmittel wirkt.

Die Treibgaskomponenten der Prepolymerzusammensetzung machen 5 bis 40 Gew.-% aus. Der CO₂-Gehalt im Treibgas kann beispielsweise etwa 5 Gew.-% bezogen auf die gesamte Treibgaskomponente, betragen. Der Gehalt, an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, max. 12 bar bei 50°C je nach der einschlägigen nationalen Vorschrift für Druckbehälter (Aerosoldosen). Der Leerraum des Druckbehälters ist der Raum, der von den nicht kondensierten Bestandteilen der Prepolymer-zusammensetzung eingenommen wird.

Die erfindungsgemäßen Prepolymerzusammensetzungen lassen sich aus üblichen Ortschaum-Druckdosen als 1K-, 1,5K und 2K-Systeme ausbringen. Bei 1,5K und 2K-Schäumen wird die zur Aushärtung des Schaums benötigte übliche Polyolkomponente in bekannter Weise getrennt von der Prepolymerzusammensetzung gehalten und erst unmittelbar vor oder bei der Ausbringung hinzugesetzt. Die Verfahren hierzu sind vielfach beschrieben und dem Fachmann bekannt, ebenso dafür geeignete Zweikomponenten-Druckdose mit einem separaten Behälter für die zweite Komponente.

Wie bereits zuvor genannt, kann es zweckmäßig sein, zur Beschleunigung der Aushärtungsreaktion übliche Katalysatoren zuzusetzen, beispielsweise tertiäre Amine.

Die erfindungsgemäßen Prepolymerzusammensetzungen sind für Dämmzwecke geeignet. Sie haben sich außerdem als besonders geeignet für die Herstellung von Sprühklebern erwiesen, das heißt Klebern auf Polyurethanbasis, die aus Aerosoldosen unter Zuhilfenahme von Luft als ergänzendes Zerstäubungsmedium versprüht werden können. Diese Kleber -können vorteilhaft zum Verkleben von Dämmatten und Dachabdeckungen untereinander und/oder mit einem Untergrund eingesetzt werden.

Die Erfindung betrifft ferner Druckdosen zur Ausbringung von Polyurethandämmschäumen mit einer Prepolymerzusammensetzung und gegebenenfalls einer davon getrennten Polyolkomponente wie vorstehend beschrieben. Die Druckdosen enthalten dann weiterhin übliche Zusätze sowie Treibmittel.

Die erfindungsgemäßen Prepolymerzusammensetzung können die üblichen Zusatzstoffe enthalten, wie Flammschutzmittel, Stabilisatoren, Zellöffner, Katalysatoren und Treibgase. Als Flammschutzmittel können übliche halogenhaltige Flammschutzmittel eingesetzt werden, aber auch solche, auf Basis von Phosphorverbindungen, wie beispielsweise Triethylphosphat oder Dimethylmethanphosphonat. Bei Verwendung von Polyesterpolyolen als Vernetzer können solche Flammschutzmittel in geringeren Mengen zugesetzt werden.

Die erfindungsgemäßen Prepolymerzusammensetzungen werden auf für den Fachmann an und für sich bekannte Weise hergestellt, wobei das Prepolymer sowohl in der Druckdose als auch außerhalb hergestellt werden kann. Dem Prepolymer werden dann in der Druckdose die benötigten Zusätze zugegeben, wie beispielsweise Stabilisatoren, Zellöffner und Flammschutzmittel, gegebenenfalls auch Tenside und weiteres Polyol, etwa Rizinusöl zur Feinabstimmung des NCO-Gehalts oder höher funktionelle Polyole > 3 zur Erhöhung des Vernetzungsgrades des ausgehärteten Schaums. Danach wird der Druckbehälter (Aerosoldose) verschlossen und das Treibmittel aufgedrückt, beispielsweise Propan, Butan, Dimethylether und/oder CO₂. Fluorkohlenwasserstoffe können ebenfalls eingesetzt werden.

Die Erfindung wird durch das nachfolgende Beispiel näher erläutert.

### Beispiel 1

Eine Prepolymerzusammensetzung wurde mit den aus der nachstehenden Tabelle ersichtlichen Komponenten in den dort angegebenen Mengen hergestellt. Als asymmetrisches Diisocyanat wurde 2,4'-MDI eingesetzt. Das 2,4'-MDI wurde vor der Abfüllung in die Dose bei 40°C aufgeschmolzen. Als Polyolkomponente wurde Voranol P110 und als sterisch gehindertes Diol wurde 2-Ethyl-1,3-hexandiol zugesetzt. Als Polyol und gleichzeitig als Flammschutzmittel wurde Ixol M 125 verwendet. In diesem Beispiel wurde als Weichmacher TMCP zugesetzt. Als Stabilisator enthielt die Abmischung Tegostab B 1048. Der zugesetzte Katalysator ist Jeffcat DMDEE (2,2-Dimorpholinodiethylether). Die Abmischung enthielt ein Treibgasgemisch aus Propan, Isobutan und Dimethylether.

| Polyolblend | |
|---|---|
| Ixol M 125 | 170 |
| TMCP | 410 |
| Tegostab B 1048 | 10 |
| Jeffcat DMDEE | 10 |
| Voranol P 1010 | 340 |
| 2-Ethyl-1,3-Hexandiol | 60 |
| | |
| | |
| Masse in g | 1000 |
| | |
| Polyolblend Einwaage | 340 |
| | |

| Isocyanat | |
|---|---|
| 2,4-MDI | 190 |

| Treibgas | |
|---|---|
| Propan | |
| Propan | 18 |
| i-Butan | 36 |
| Dimethylether | 34 |
| | |
| Gesamtgewicht in g | 618 |
| | |
| NCO-Gehalt in % | 6,20 |
| Füllgrad der Dose in Vol.-% | 75 % |

Alle Angaben sind in Gewichtsprozent soweit nicht anders angegeben.

Der zum Einsatz kommende Vernetzer ist in diesem Fall das sterisch gehinderte Diol, dem der Reaktionsbeschleuniger (Katalysator) zugesetzt ist.

Unter ständigem Rühren wird die gewünschte Menge des zuvor beschriebenen Gemisches in einem feuchtigkeitsfreien Druckbehälter gegeben und mit einem Ventil verschlossen. Nach dem Verschließen wird die entsprechende Menge Treibgas aufgedrückt. Zweckmäßigerweise werden die einzelnen Komponenten der Treibgasmischung nacheinander aufgedrückt und gegebenenfalls in einem zweiten Durchgang noch einmal aufgefüllt. Besonders geeignet ist eine Mischung aus Dimethylether mit kurzkettigen Alkanen.

Das vorstehende Beispiel entspricht einer monomerarm eingestellten Prepolymerzusammensetzung und Füllanteilen für einen Druckbehälter mit einem Füllgrad von 75 %. Die Mischung ergibt ein dimensionsstabilen Schaum mit sehr guten Dämmeigenschaften. Bei der Ausbringung des Schaums konnten toxisch wirkende Substanzen in bedenklichen Mengen nicht nachgewiesen werden, insbesondere kein Restmonomer.

Der Schaum kann insbesondere auch als Sprühkleber verwendet werden.

## Patentansprüche

1. Druckdose, enthaltend eine Prepolymerzusammensetzung, insbesondere zur Erzeugung von Polyurethanschäumen, auf Basis von Polyisocyanaten und Polyolen, **dadurch gekennzeichnet, dass** die Prepolymerzusammensetzung PU-Prepolymere aus der Reaktion von Diphenylmethan-2,4'-diisocyanat oder 2,4-Tolylendiisocyanat mit sterisch gehinderten Polyolen mit wenigstens zwei Hydroxyfunktionen enhält, wobei die sterisch gehinderten Polyole monomere Diole mit sekundären und/oder tertiären Hydroxygruppen sind.

2. Druckdose nach Anspruch 1, **dadurch gekennzeichnet, dass** die sterisch gehinderten Polyole Propylenglykol, 2,3-Butandiol, 2,3-Dimethyl-2,3-butandiol, 2-Ethyl-1,3-hexandiol, 2-Methyl-1,3-butandiol, 1-Phenyl-1,4-butandiol und/oder 2-Methyl-1,3-propandiol, sind.

3. Druckdose nach Anspruch 1 oder 2, **dadurch gekennzeichnet, dass** die Prepolymerzusammensetzung mit tertiären Aminen als Katalysator erhältlich ist.

4. Druckdose nach Anspruch 3, **dadurch gekennzeichnet, dass** der Katalysator Dimorpholinodimethylether, Dimorpholinoethylether, Di-(2,6-dimethylmorpholinoethyl)ether und/oder N-Methylmorpholin, N,N,N',N'-Tetramethylhexan-1,6-diamin, N,N,N',N'-Tetramethyl-methylendiphenyl-4,4'-diamin, N,N,N',N'-Tetramethyl-methylendihexyl-4,4'-diamin, N,N-Dimethylcyclohexylamin, N,N- Dipropylcyclohexylamin und/oder N,N-Dicylohexylmethylamin ist.

5. Druckdose nach einem der vorstehenden Ansprüche, **dadurch gekennzeichnet, dass** sie übliche Hilfsmittel und ein Treibgasgemisch enthält.

6. Druckdose nach Anspruch 5, **dadurch gekennzeichnet, dass** sie Propan, Butan und/oder Dimethylether als Treibgaskomponenten enthält.

7. Verwendung der Druckdose nach einem der vorstehenden Ansprüche zur Erzeugung von 1K-, 1,5K- und/oder 2K-Polyurethanschäumen.

8. Verwendung der Druckdose nach einem der Ansprüchen 1 bis 7 zur Erzeugung von Montageschäumen auf Polyurethanbasis.

## Claims

1. A pressurised dispenser containing a prepolymer composition, particularly for producing polyurethane foams on the basis of polyisocyanates and polyols, **characterised in that** the prepolymer composition contains PU prepolymers from the reaction of diphenylmethane-2,4'-diisocyanate or 2,4-tolylene diisocyanate with sterically hindered polyols with at least two hydroxyl functions, wherein the sterically hindered polyols are monomeric diols with secondary and/or tertiary hydroxyl groups.

2. A pressurised dispenser as claimed in Claim 1, **characterised in that** the sterically hindered polyols are propylene glycol, 2,3-butane diol, 2,3-dimethyl-2,3-butane diol, 2-ethyl-1,3-hexane diol, 2-methyl-1,3-butane diol, 1-phenyl-1,4-butane diol and/or 2-methyl-1,3-propane diol.

3. A pressurised dispenser as claimed in Claim 1 or 2, **characterised in that** the prepolymer composition is obtained with tertiary amines as a catalyst.

4. A pressurised dispenser as claimed in Claim 3, **characterised in that** the catalyst is dimorpholinodimethylether, dimorpholinoethylether, di-(2,6-dimethylmorpholinoethyl)ether and/or N-methylmorpholine, N,N,N',N'-tetramethylhexane-1,6-diamine, N,N,N',N'-tetramethyl-methylenediphenyl-4,4'-diamine, N,N,N',N'-tetramethyl-methylenedihexyl-4,4'-diamine, N,N-dimethylcyclohexylamine, N,N-dipropylcyclohexylamine and/or N,N-dicyclohexylmethylamine.

5. A pressurised dispenser as claimed in one of the preceding claims, **characterised in that** it contains conventional additives and a propellant gas mixture.

6. A pressurised dispenser as claimed in Claim 5, **characterised in that** it contains propane, butane and/or dimethylether as propellant gas components.

7. Use of the pressurised dispenser as claimed in one of the preceding claims for producing 1K, 1.5K and/or 2K polyurethane foams.

8. Use of the pressurised dispenser as claimed in one of Claims 1 to 7 for producing assembly foams based on polyurethane.

## Revendications

1. Distributeurs sous pression, contenant une composition de prépolymère, notamment pour la formation de mousses de polyuréthane, à base de polyisocyanates et de polyols, **caractérisés en ce que** la composition de prépolymère contient des prépolymères de PU issus de la réaction de 2,4'-diisocyanate de diphénylméthane ou de diisocyanate de 2,4-tolylène avec des polyols à encombrement stérique contenant au moins deux fonctions hydroxy, les polyols à encombrement stérique étant des diols monomères contenant des groupes hydroxy secondaires et/ou tertiaires.

2. Distributeurs sous pression selon la revendication 1, **caractérisés en ce que** les polyols à encombrement stérique sont du propylène glycol, du 2,3-butanediol, du 2,3-diméthyl-2,3-butanediol, du 2-éthyl-1,3-hexanediol, du 2-méthyl-1,3-butanediol, du 1-phényl-1,4-butanediol et/ou du 2-méthyl-1,3-propanediol.

3. Distributeurs sous pression selon la revendication 1 ou 2, **caractérisés en ce que** la composition de prépolymère peut être obtenue avec des amines tertiaires en tant que catalyseur.

4. Distributeurs sous pression selon la revendication 3, **caractérisés en ce que** le catalyseur est l'éther dimorpholinodiméthylique, l'éther dimorpholinoéthylique, l'éther di-(2,6-diméthylmorpholinoéthylique) et/ou la N-méthylmorpholine, la N,N,N',N'-tétraméthylhexane-1,6-diamine, la N,N,N',N'-tétraméthyl-méthylènediphényl-4,4'-diamine, la N,N,N',N'-tétraméthyl-méthylènedihexyl-4,4'-diamine, la N,N-diméthylcyclohexylamine, la N,N-dipropyl-cyclohexylamine et/ou la N,N-dicyclohexylméthylamine.

5. Distributeur sous pression selon l'une quelconque des revendications précédentes, **caractérisé en ce qu'**il contient des adjuvants usuels et un mélange de gaz propulseur.

6. Distributeur sous pression selon la revendication 5, **caractérisé en ce qu'**il contient du propane, du butane et/ou de l'éther diméthylique en tant que composants du gaz propulseur.

7. Utilisation du distributeur sous pression selon l'une quelconque des revendications précédentes pour former des mousses de polyuréthane 1K, 1,5K et/ou 2K.

8. Utilisation du distributeur sous pression selon l'une quelconque des revendications 1 à 7 pour former des mousses de montage à base de polyuréthane.
